# EUROPEAN PATENT SPECIFICATION

(11) **EP 2 126 661 B1**
(45) Date of publication and mention of the grant of the patent: **30.04.2014**
(21) Application number: 08723878.8
(22) Date of filing: 05.03.2008
(51) Int. Cl.: G06F 1/16, G06F 1/32

(54) **A DISPLAY UNIT, A METHOD AND A COMPUTER PROGRAM PRODUCT**
ANZEIGEEINHEIT, VERFAHREN UND COMPUTERPROGRAMMPRODUKT
UNITÉ D'AFFICHAGE, PROCÉDÉ ET PRODUIT POUR PROGRAMME INFORMATIQUE

(30) Priority: 06.03.2007 EP 07103630; 06.03.2007 US 893293 P
(43) Date of publication of application: 02.12.2009
(60) Divisional application: 12164709.3
(73) Proprietor: Creator Technology B.V., 4837 BN Breda (NL)
(72) Inventor: HUITEMA, Hjalmar Edzer Ayco, NL-5501 CK Veldhoven (NL); VAN LIESHOUT, Petrus Johannes Gerardus, NL-5741 EA Beek En Donk (NL); HAMERS, Johannes Cornelis Adriaan, NL-5694 CK Breugel (NL)
(74) Representative: Goddar, Heinz J.
(86) International application number: PCT/NL2008/050127
(87) International publication number: WO 2008/108645

(56) References cited:
- EP-A- 1 107 101
- WO-A-00/04437
- WO-A-03/050963
- WO-A-2005/020190
- WO-A-2006/085271
- WO-A-2006/123297
- GB-A- 2 336 020
- US-A1- 2003 227 441
- US-A1- 2004 001 049

## Description

The invention relates to a display unit comprising a flexible display having a depicting side for depicting visual information, the flexible display being deformable between a storage state wherein the flexible display is in a deformed position, and a depicting state wherein the depicting side of the flexible display is substantially flat, is visible from an exterior point of view and it is possible to control the visual information content on the depicting side.

International publication WO 2006/085271 A1 discloses a display unit with a flexible display that is wrappable and deformable between a storage state wherein the flexible display in a deformed position, and a depicting state wherein the depicting side of the flexible display is substantially flat.

US patent application US 2004/0001049 A1 discloses a multiple mode display apparatus in which a display area can be partially covered by means of a keyboard housing that is moveable with respect to the display area. Once the keyboard housing covers the display area, the corresponding part of the display area is deactivated to reduce the power consumption.

WO 2005 02019 describes a retractable flexible digital display apparatus wherein a flexible digital display is retractable into a portable housing. A display size calibration sensor allows the width of the flexible display assembly, when partially retracted, to be calculated so that the position of a radio frequency transmitter pen can be sensed relative to the partially retracted flexible display assembly.

EP 1 107 101 A2 describes a flat display of a mobile phone or the like, the display being covered by a touch sensitive slide. Slide position sensing can be used to coordinate and determine the partial or full display of information on the display depending on the position of the slide in relation to the housing.

Patent publication WO 2006/061786 discloses a flexible display on which visual information, e.g. e-mail messages, can be depicted. The display can be deformed between two states, viz. the depicting state for reading the display and the storage state for storing the display. In the depicting state the depicting side of the display is substantially flat, is visible from an exterior point of view with respect to the display unit and it is possible to control the content of the depicting side, so that a user can read information that is depicted on the display. In the storage state, the flexible display has been deformed to a compact volume, e.g. by rolling or wrapping the display and can be protected against external mechanical influences. If the depicting side of the flexible display is substantially inwardly oriented, in the storage state, that side is invisible from the exterior point of view.

However, for viewing information shown by the display unit on an active way, the flexible display has to be deformed from the storage state to the depicting state which is not convenient for a user who wants to regularly check information of the display unit, such as status information of a device or whether new messages have been received by a mobile device.

It is an object of the invention to provide a display unit according to the preamble wherein a user can more readily check information of the display.

The present invention provides a display unit according to claim 1 and a display method according to claim 9.

In order that the invention may be more fully understood, embodiments thereof will now be described by way of example only, with reference to the figures in which:
Figure 1 shows a schematic perspective view of an exemplary display unit;
Figure 2 shows a schematic perspective view of an embodiment of a display unit according to the invention;
Figure 3a shows a simplified schematic plan view of the display unit of Figure 2 in a storage state;
Figure 3b shows a simplified schematic plan view of the display unit of Figure 2 in an intermediate state;
Figure 3c shows a simplified schematic plan view or the display unit of Figure 2 in a depicting state;
Figure 4 shows a further schematic plan view of the display unit of Figure 3b;
Figure 5 shows a yet further schematic plan view of the display unit of Figure 3b; and
Figure 6 shows a further schematic plan view of the display unit of Figure 3b.

The figures are merely schematic views of preferred embodiments according to an embodiment of the invention. In the figures, the same reference numbers refer to equal or corresponding parts.

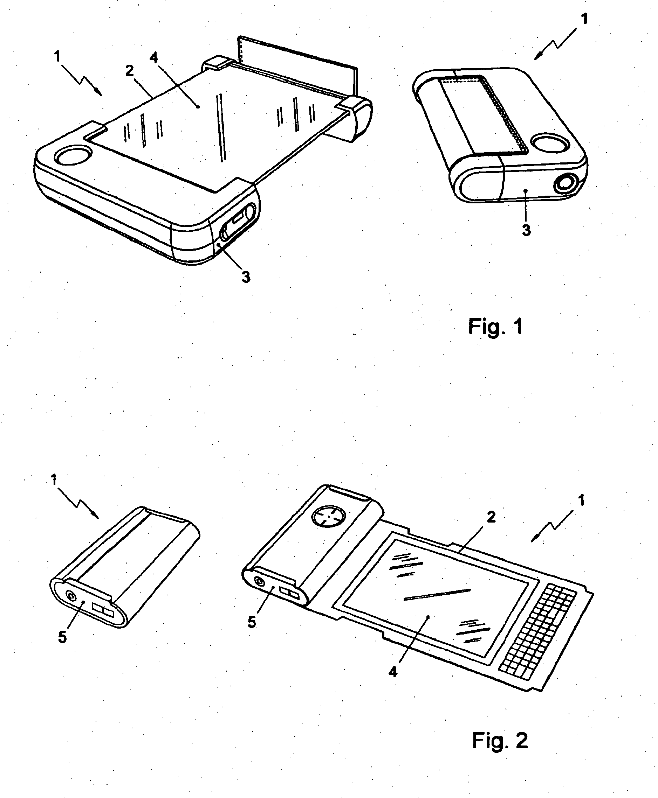

Figure 1 shows a schematic perspective view of an exemplary display unit 1 having a flexible display 2 that is rollable around a cylinder that is arranged inside a housing 3 of the display unit 1. On the left hand side, a depicting state of the flexible display 2 is shown wherein a depicting side 4 of the display is substantially flat, visible from an exterior point of view with respect to the display unit 1 and the visual information content on the depicting side is controlled by a display controller (not shown). In the depicting state of the flexible display 2, the display 2 is substantially flat e.g. supported by one or more telescoping supporters. On the right hand side, a storage state is shown wherein the display 2 is deformed, in this embodiments substantially entirely rolled around the cylinder, so that the depicting side of the flexible display is substantially inwardly oriented and thus invisible from the exterior point of view. Normally, in the storage, in-operative state, the unit 1 is switched off or in a stand by modus.

It is noted that the flexible display 2 can also be implemented rollable otherwise, e.g. around an external cylinder. It is further noted that with the expression 'inwardly oriented' is meant that the normal vector of the surface points to the interior of the display unit. Finally, it is noted that on alternative way the flexible display can be rolled with the depicting side substantially outwardly oriented.

Figure 2 shows a schematic perspective view of an embodiment of a display unit 1 according to the invention having a flexible display 2 that is wrappable with respect to a kernel 5 of the unit 1. On the right hand side, the unit 1 is shown in the depicting state of the flexible display 2, while on the left hand side, the unit 1 is shown in the storage state of the flexible display 2. In the depicting state of the flexible display 2, the display 2 is substantially flat e.g. supported by one or more pivoting supporters.

The display unit 1 shown in Figures 1 and 2 can be used in mobile devices, such as mobile telephones, PDA's etc. The flexible display 2 comprises e.g. an electrophoretic display, also known as E Ink which is a trademark of E Ink Corporation, Cambridge, USA. Electrophoretic displays are known from the prior art, e.g. from patent publication US2007/0018944 A1, which is incorporated herein by reference.

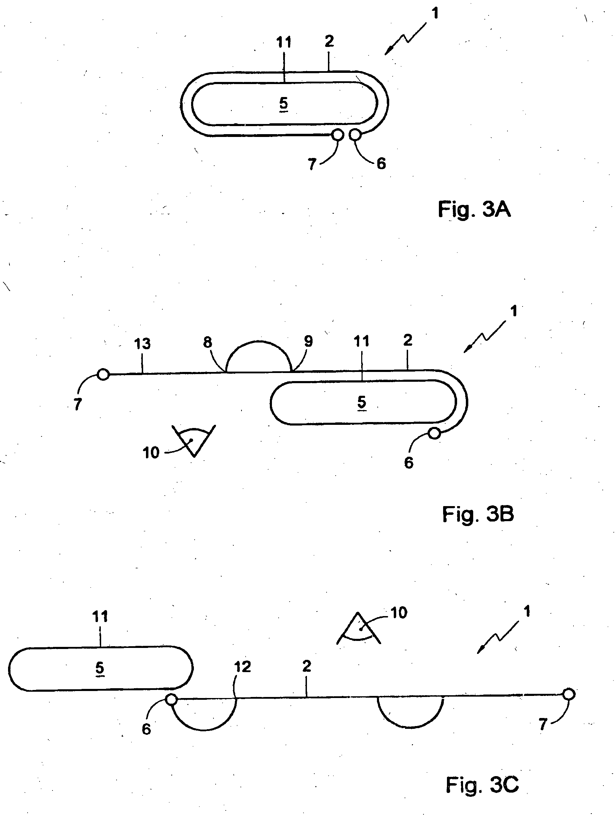

Figure 3a, 3b, 3c show a simplified schematic plan view of the display unit 1 of Figure 2 in the storage state, the depicting state, and an additional state, also called an intermediate state, respectively, of the flexible display 2. The flexible display 2 is of the wrappable type. In the storage state, the depicting side 4 of the flexible display 2 is oriented inwardly towards the kernel 5 of the display unit 1 and thereby invisible from an exterior point of view. The kernel is provided with a user interface 11. The flexible display 2 having a first end 6 and a second end 7 makes a complete turn around the kernel 5. In principle, however, the display 2 may also enclose the kernel 5 twice or more. Further, the display 2 may surround the kernel 5 partially.

In the intermediate state, shown in Figure 3b, the flexible display 2 is deformed from the storage state by a partial unwrapping action. In particular, a first curve section between curve end points 8 and 9 has been flattened. The first curve section serves as a first hinge. Thereby, in the intermediate state, a depicting side of a section 13 of the display 2 adjacent to the second end is flat, visible from a point of view 10 exterior to the display unit 1 and visual information content is controlled by a display controller (not shown). In principle, more that one additional intermediate state of the flexible display 2 can be provided. In the intermediate state of the flexible display, a part of the display depicting side can be seen from an exterior point of view. Said visible display part can be provided with visual information content by controlling the display by means of the controller. In the intermediate state, one or more sections of the flexible display that are oriented outwardly, away from the kernel, are generally visible from the exterior point of view. Visual information content can be provided on a visible part of the display by selecting and addressing the corresponding pixels in said visible part.

In the depicting state, shown in Figure 3c, the flexible display 2 is further deformed by an additional unwrapping action. In particular, a second curve section between a curve end point 12 and the first end of the flexible display 2 has been flattened, so that substantially the entire depicting side of the flexible display 2 is flat, visible from the exterior point 10 and visual information content is controlled by the display controller. Here, the second curve section serves as a second hinge.

Preferably, the display unit 1 is arranged such that the flexible display 2 is more or less secured in the intermediate state to provide a stable mechanical state of the unit 1. Thereto, the unit further comprises a stabilizer for enabling a stable mechanical position of the flexible display after deformation to the at least one additional operating state. It is noted that a corresponding rollable display can also be arranged such that the intermediate state is more or less stable, e.g. by providing more or less telescoping supporters having an intermediate stable position.

The additional state is for use in crowded environments and for having a good grip on the unit 1. Possible applications, that can be used in the intermediate, partial unwrapped state, are consulting sms and/or e-mail messages, phone contact list, and mp3 play list and volume control,

The display 2 comprises rigid and flexible sections to facilitate deformation of the display 2. In particular, the curved sections of the flexible display 2 in Figure 3A, the hinges, are flexible. However, also flat sections of the display 2 in Figure 3A can be manufactured from flexible display material. Further, the display can be provided with a sequence of hinges and flat sections, arranged in an alternating manner. As such, the display may comprise two hinges wherein a flat section is located between the hinges, or more hinges, e.g. three hinges wherein between subsequent hinges a flat section is located. By flattening some, not all hinges, an intermediate state of the display unit can be obtained. By flattening all hinges, the entire display is unwrapped and brought into the depicting state.

Curve end points 8, 9, 12 are provided with a deformation detector for detecting the deformation of the flexible display 2 to the at least one additional state and for generating a detecting signal. By providing a deformation detector the state of the flexible display 2 can be determined, especially which depicting side area of the display 2 is visible from the exterior point 10.

Optionally, the display unit further comprises a display processor that is arranged to control visual information adapted for the at least one additional state of the flexible display 2. In particular, the display processor is arranged to control visual information on a substantially flat and visible part of the flexible display 2 from the exterior point 10 in response to a detecting signal of the orientation detector. In this way, the visual information is automatically shown on the visible part of the display 2 after performing the first unwrapping action. Alternatively, the visual information is shown on the visible part upon an additional user action, e.g. via a user interface.

It is noted that the process of depicting the visual information can be caused by hardware component and/or by software.

Further, the deformation detectors can be provided with lock and/or unloek functionality or another appropriate user interface action, such as page up/page down, see below.

The deformation detectors can each be implemented in various manners, among others as a:
(i) Hall sensor generating a signal proportional to the distance of magnet to the sensor when the magnet is close enough. The sensor can typically be integrated in the border edge around the display 2;
(ii) potential meter integrated in the curving zones in order to detect the position of the curving zone by a resistance measurement circuit, being an analogue measurement of the curving state of a flexible section and can optionally also be used to detect intermediate states during (un)wrapping actions;
(iii) light sensor detecting if a part of the display is unwrapped, being a typical digital measurement integrated in the border edge of the display;
(iv) pull strip or piezo element, the 'pull strip' changing its resistance depending on the strain (elongating or compressive) exerted on the strip. The strip can be integrated in the curved sections of the display 2. The piezo element works in a similar manner;
(v) reed relais being a digital switch that can be switched by a magnetic field. The reed relais can be integrated in the border edge of the display 2.

As a result, the deformation detectors can comprise an electronic measurement sensor and/or a magnetic field sensor.

In Figure 3b, the user interface 11 is still covered by the part of the display 2 that is wrapped and cannot be used. This can be solved by adding limited user interface functionality on the other side of the device body or on the top and/or bottom of the display unit 1. The limited user interface could specifically be designed for operating the display unit in its partially unwrapped state, the additional operative state.

In terms of functionality, a simple user interface can be added on the kernel 5 that is brought in the partially unwrapped state. This user interface can be dedicated for use of the partially unwrapped display part. As an example, it can be a simple four-way button that can be used to scroll through item lists on the display.

Further, in terms of functionality, a keyboard can be added. This is in particular advantageous as the unit in its partially unwrapped state is an ideal configuration for typing as the user can hold the unit in this configuration in an easy way in on or both hands. This would make the partially unwrapped state the 'typing mode' of the unit and the completely unwrapped state the `reading mode'. The applications could be configured in such a way that they automatically switch to the typing mode when the user switches to the partially unwrapped state. For example, when reading e-mail, going the partially unwrapped state automatically triggers the reply action. The same can be done in the sms application. The keyboard can also contain four navigation keys for navigation to an on-screen list of items.

In general, user interface elements can be located on a front and/or back surface of the flexible display, on or opposite to the depicting side, on side sections, on a top and/or on a bottom section of the display unit 1.

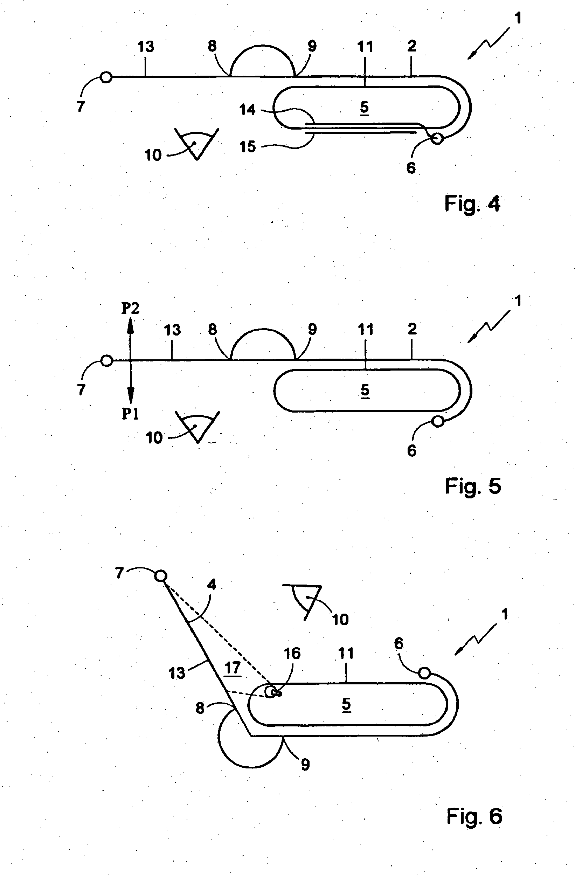

Practically, a user interface can be implemented by adding a display 14 with touch screen 1.5 to the unwrapped part of the device body, as shown in Figure 4. In this way a reconfigurable user interface can be created that can be configured as a keyboard and/or as navigation keys. One implementation that would be ideal is to use the same display foil both for the wrapping part and for the reconfigurable usher interface display part.

As a further option, a wrap / unwrap action can also be used for interacting with the display 2. Especially the partially unwrapped state is ideal for this kind of interaction as only one curved section between curve end points 8, 9 is in principle free to pivot in that state. Moving the free display end 7 towards the wrapped state P1 by a certain number of degrees can, for example, be the page down action; moving the free display end the other way P2 can, for example, be the page up action, as shown in Figure 5. Obviously, the functionality can also be implemented vice versa. Further, other user interface functionality can be implemented. The curved section can be constructed in such a way that flexing up and down is possible, while still having a good stable position in the flat state. The `overstretch' possibility of the curved section and the display could also be beneficial for the reliability of the unit 1. This is similar to the way in which eyeglasses are constructed.

In the partially unwrapped state, a front light can be used, e.g. for use of the unit 1 during poor lighting conditions. In Figure 6, such a configuration is shown. The orientation of the free display section 13 is not parallel with the longitudinal axis of the kernel 5, but tilted. Preferably, the curved section between curved end points 8, 9 has an additional stable (clicking) position in the tilted state. The kernel 5 is provided with a light source 16 to illuminate the depicting side 4 of the free display end 13. The direction of the light beam 17 generated by the light source 16 can be adjusted according to the tilt angle of the free display end 13 with respect to longitudinal axis of the kernel. Here, a potential meter arranged in the curved section between curved end points 8, 9 can be used.

In the intermediate state of the flexible display 2, a part of the depicting side, e.g. half of it, is not externally visible and therefore does not need to be updated by the unit 1. In general, the display comprises matrix pixels that arse activated by column and row electrodes. Depending on the orientation, only a part of the column or row electrodes has to be used to show the visual information on the visible part of the display. Preferably, the visible part of the display is operated by a main display control processor, while the non-visible part of the display is operated by a separate display control processor, so that the separate display control processor can be switched off or turned to a zero volt state, thereby saving energy. After deforming the display in the depicting, the separate display control processor can be initialized for normal operation. Further, the amount of data that has to be sent to the display control processors is much less when only a part of the display has to be updated. This will also conserve energy.

It is noted that on alternative way the flexible display 2 can be wrapped with the depicting side substantially outwardly oriented with respect to the kernel 5 of the unit 1 with the same advantages of the additional state.

While specific embodiments have been described above, it will be appreciated that the invention may be practiced otherwise than as described. The description is not intended to limit the invention. Any reference signs in the claims shall not be construed as limiting the scope.

## Claims

1. A display unit (1) comprising a kernel (5) and a flexible display (2) being wrappable with respect to the kernel (5), the flexible display (2) having a depicting side (4) for depicting visual information, the flexible display (2) being deformable between a storage state wherein the flexible display (2) is in a deformed position, and a depicting state wherein the depicting side (4) of the flexible display (2) is substantially flat, is visible from an exterior point of view and it is possible to control visual information content on the depicting side (4), wherein the display unit (1) is further such arranged that the flexible display (2) is deformable between the storage state and the depicting state to at least one additional state wherein a part of the depicting side (4) of the flexible display (2) is substantially flat, is visible from the exterior point of view and it is possible to control visual information content of that part of the depicting side (4);
**characterized by**
a deformation detector for detecting the deformation of the flexible display (2) to the at least one additional state and for generating a detecting signal; and
a processor that is arranged to control the visual information content in response to the detecting signal so that, in the at least one additional state of the flexible display (2), information is depicted only on the visible part of the depicting side (4);
wherein the kernel is provided with a light source (16) adapted to illuminate the depicting side (4) of the flexible display (2) in the additional state;
wherein the light source (16) is adapted such that a direction of a light beam (17) generated by the light source (17) is adjusted according to a detected tilt angle of the depicting side (4) with respect to a longitudinal axis of the kernel (5), said tilt angle being detected by means of said deformation detector.

2. The display unit (1) according to claim 1, comprising at least two flexible curved sections wherein, in the additional state, a flexible curved section is flattened.

3. The display unit (1) according to any of the previous claims, wherein the deformation detector comprises an electronic measurement sensor and/or a magnetic field sensor.

4. The display unit (1) according to any of the previous claims, further comprising a stabilizer for enabling a stable mechanical position of the flexible display (2) after deformation to the at least one additional state.

5. The display unit (1) according to any of the previous claims, wherein the deformation detector further has a user interface functionality, e.g. the display unit (1) is arranged such that upon a detection of a movement in a direction of the storage state or depicting state, a user interface functionality is activated.

6. The display unit (1) according to any of the previous claims, further comprising a user interface, such as a key board, a four way button and/or a touch screen, that is implemented separately or integrated with the flexible display (2).

7. The display unit (1) according to claim 6, wherein in the at least one additional state the user interface is covered and in the depicting state the user interface is uncovered by the flexible display (2).

8. The display unit (1) according to claim 6 or 7, further comprising an additional user interface that is dedicated for use in the at least one additional state of the flexible display (2).

9. A method of depicting information on a depicting side (4) of a flexible display (2) of a display unit (1), the display unit (1) comprising a kernel (5) with respect to which the flexible display (1) is wrappable, the flexible display (2) being deformable between a storage state wherein the flexible display (2) is in a deformed position, and a depicting state wherein the depicting side (4) of the flexible display (2) is substantially flat, visible from an exterior point of view and it is possible to control the visual information content on the depicting side (4), the method being **characterized by** the steps of:
depicting information on only a part of the depicting side (4) of the flexible display (2) when the flexible display (2) has been deformed to an additional state between the storage state and the depicting state;
detecting the deformation of the flexible display (2) to the at least one additional state by means of a deformation detector, and generating a detecting signal;
controlling the visual information content in response to the detecting signal so that, in the at least one additional state of the flexible display (2), information is depicted only on the visible part of the depicting side (4); and
providing the kernel (5) with a light source (16) adapted to illuminate the depicting side (4) of the flexible display (2) in the additional state; and
adjusting a direction of a light beam (17) generated by the light source (16) according to a detected tilt angle of the depicting side (4) with respect to a longitudinal axis of the kernel (5), said tilt angle being detected by means of said deformation detector.

10. A computer program product comprising computer readable code causing a computer to perform a method according to claim 9.

## Patentansprüche

1. Anzeigeeinheit (1) mit einem Kern (5) und einer flexiblen Anzeigeeinrichtung (2), welche bezüglich des Kerns (5) wickelbar ist, wobei die flexible Anzeigeeinrichtung (2) eine Anzeigeseite (4) zum Anzeigen visueller Informationen umfasst und die flexible Anzeigeeinrichtung (2) zwischen einem Stauzustand, in welchem sich die Anzeigeeinrichtung (2) in einer verformten Lage befindet, und einem Anzeigezustand, in welchem die Anzeigeseite (4) der flexiblen Anzeigeeinrichtung (2) im Wesentlichen eben ist, von einem äußeren Betrachtungspunkt aus sichtbar ist und das Steuern des Inhalts visueller Informationen auf der Anzeigeseite (4) möglich ist, verformbar ist, wobei die Anzeigeeinheit (1) ferner derart eingerichtet ist, dass die flexible Anzeigeeinrichtung (2) zwischen dem Stauzustand und dem Anzeigezustand in wenigstens einen zusätzlichen Zustand verformbar ist, in welchem wenigstens ein Teil der Anzeigeseite (4) der flexiblen Anzeigeeinrichtung (2) im Wesentlichen eben ist, von dem äußeren Betrachtungspunkt aus sichtbar ist und das Steuern des Inhalts visueller Informationen auf diesem Teil der Anzeigeseite (4) möglich ist; **gekennzeichnet durch**:
eine Verformungserfassungseinrichtung zum Erfassen der Verformung der flexiblen Anzeigeeinrichtung (2) in den wenigstens einen zusätzlichen Zustand und zum Erzeugen eines Erfassungssignals; und
eine Prozessoreinrichtung, welche dazu eingerichtet ist, den visuellen Informationsinhalt als Reaktion auf das Erfassungssignal zu steuern, so dass in dem wenigstens einen zusätzlichen Zustand der flexiblen Anzeigeeinrichtung (2) Informationen nur auf dem sichtbaren Teil der Anzeigeseite (4) angezeigt werden;
wobei der Kern eine Lichtquelle (16) umfasst, welche zum Beleuchten der Anzeigeseite (4) der flexiblen Anzeigeeinrichtung (2) in dem zusätzlichen Zustand eingerichtet ist;
wobei die Lichtquelle (16) derart eingerichtet ist, dass eine Richtung eines von der Lichtquelle (16) erzeugten Lichtstrahls (17) gemäß einem erfassten Neigungswinkel der Anzeigeseite (4) bezüglich einer Längsachse des Kerns (5) angepasst wird, wobei der Neigungswinkel mittels der Verformungserfassungseinrichtung erfasst wird.

2. Anzeigeeinheit (1) nach Anspruch 1 mit wenigstens zwei flexiblen gekrümmten Abschnitten, wobei in dem zusätzlichen Zustand ein flexibler gekrümmter Abschnitt geebnet ist.

3. Anzeigeeinheit (1) nach einem der vorangehenden Ansprüche, bei welcher die Verformungserfassungseinrichtung einen elektronischen Messsensor und/oder einen Sensor für magnetische Felder umfasst.

4. Anzeigeeinheit (1) nach einem der vorangehenden Ansprüche mit zusätzlich einer Stabilisierungseinrichtung zum Ermöglichen einer stabilen mechanischen Position der flexiblen Anzeigeeinrichtung (2) nach der Verformung in den wenigstens einen zusätzlichen Zustand.

5. Anzeigeeinheit (1) nach einem der vorangehenden Ansprüche, bei welcher die Verformungserfassungseinrichtung eine Nutzerschnittstellenfunktionalität aufweist, beispielsweise die Anzeigeeinheit (1) derart eingerichtet ist, dass in Reaktion auf eine Erfassung einer Bewegung in eine Richtung des Stauzustands oder des Anzeigezustands eine Nutzerschnittstellenfunktionalität aktiviert wird.

6. Anzeigeeinheit (1) nach einem der vorangehenden Ansprüche mit zusätzlich einer Nutzerschnittstelleneinrichtung, beispielsweise einer Tastatur, einem Vierrichtungs-Schalter und/oder einem berührungssensitiven Bildschirm, welche getrennt ausgeführt oder in die flexible Anzeigeeinrichtung (2) integriert ist.

7. Anzeigeeinheit (1) nach Anspruch 6, bei welcher die Nutzerschnittstelleneinrichtung in dem wenigstens einem zusätzlichen Zustand durch die flexible Anzeigeeinrichtung (2) abgedeckt ist und in dem Anzeigezustand aufgedeckt ist.

8. Anzeigeeinheit (1) nach Anspruch 6 oder 7 mit einer zusätzlichen Nutzerschnittstelleneinrichtung, welche zur Benutzung in dem wenigstens einen zusätzlichen Zustand der flexiblen Anzeigeeinrichtung (2) eingerichtet ist.

9. Verfahren zum Anzeigen von Informationen auf eine Anzeigeseite (4) einer flexiblen Anzeigeeinrichtung (2) einer Anzeigeeinheit (1), wobei die Anzeigeeinheit (1) einen Kern (5) umfasst, bezüglich dessen die flexible Anzeigeeinrichtung (2) wickelbar ist, wobei die flexible Anzeigeeinrichtung (2) zwischen einem Stauzustand, in welchem sich die flexible Anzeigeeinrichtung (2) in einer verformten Lage befindet, und einem Anzeigezustand, in welchem die Anzeigeseite (4) der flexiblen Anzeigeeinrichtung (2) im Wesentlichen eben ist, von einem äußeren Betrachtungspunkt aus sichtbar ist und das Steuern des Inhalts visueller Informationen auf der Anzeigeseite (4) möglich ist, verformbar ist, wobei das Verfahren durch die folgenden Schritte charakterisiert ist:
Anzeigen von Informationen nur auf einem Teil der Anzeigeseite (4) der flexiblen Anzeigeeinrichtung (2), wenn die flexible Anzeigeeinrichtung (2) in einen zusätzlichen Zustand zwischen dem Stauzustand und dem Anzeigezustand verformt ist;
Erfassen der Verformung der flexiblen Anzeigeeinrichtung (2) in den wenigstens einen zusätzlichen Zustand mittels einer Verformungserfassungseinrichtung und Erzeugen eines Erfassungssignals;
Steuern des Inhalts der visuellen Informationen in Reaktion auf das Erfassungssignal, so dass in dem wenigstens einen zusätzlichen Zustand der flexiblen Anzeigeeinrichtung (2) Informationen nur auf dem sichtbaren Teil der Anzeigeseite (4) dargestellt werden; und
Ausbilden des Kerns (5) mit einer Lichtquelle (16), welche zum Beleuchten der Anzeigeseite (4) der flexiblen Anzeigeeinrichtung (2) in dem zusätzlichen Zustand eingerichtet ist; und
Anpassen einer Richtung eines von der Lichtquelle (16) erzeugten Lichtstrahls (17) gemäß einem erfassten Neigungswinkel der Anzeigeseite (4) bezüglich einer Längsachse des Kerns (5), wobei der Neigungswinkel mittels der Verformungserfassungseinrichtung erfasst wird.

10. Computerprogrammprodukt mit computerlesbaren Instruktionen, welche einen Rechner veranlassen, ein Verfahren nach Anspruch 9 auszuführen.

## Revendications

1. Unité d'affichage (1) comprenant un noyau (5) et un afficheur souple (2) enveloppable par rapport au noyau (5), l'afficheur souple (2) ayant un côté illustratif (4) pour illustrer des informations visuelles, l'afficheur souple (2) étant déformable entre un état de stockage dans lequel l'afficheur souple (2) se trouve dans une position déformée, et un état illustratif dans lequel le côté illustratif (4) de l'afficheur souple (2) est sensiblement plat, est visible depuis un point de vue extérieur et il est possible de commander le contenu d'informations visuelles sur le côté illustratif (4), l'unité d'affichage (1) étant en outre agencée de telle sorte que l'afficheur souple (2) soit déformable entre l'état de stockage et l'état illustratif et au moins un état supplémentaire dans lequel une partie du côté illustratif (4) de l'afficheur souple (2) est sensiblement plate, est visible depuis le point de vue extérieur et il est possible de commander le contenu d'informations visuelles de cette partie du côté illustratif (4) ; **caractérisée par**
un détecteur de déformation pour détecter la déformation de l'afficheur souple (2) sur l'au moins un état supplémentaire et générer un signal de détection ; et
un processeur qui est agencé pour commander le contenu d'informations visuelles en réponse au signal de détection de telle sorte que, dans l'au moins un état supplémentaire de l'afficheur souple (2), les informations soient illustrées uniquement sur la partie visible du côté illustratif (4)
;
dans lequel le noyau est doté d'une source de lumière (16) adaptée pour éclairer le côté illustratif (4) de l'afficheur souple (2) dans l'état supplémentaire ;
dans lequel la source de lumière (16) est adaptée de telle sorte qu'un sens d'un faisceau de lumière (17) généré par la source de lumière (16) soit réglé en fonction d'un angle d'inclinaison détecté du côté illustratif (4) par rapport à un axe longitudinal du noyau (5), ledit angle d'inclinaison étant détecté au moyen dudit détecteur de déformation.

2. Unité d'affichage (1) selon la revendication 1, comprenant au moins deux sections courbes souples dans laquelle, dans l'état supplémentaire, une section courbe souple est aplatie.

3. Unité d'affichage (1) selon l'une quelconque des revendications précédentes, dans laquelle le détecteur de déformation comprend un capteur de mesure électronique et/ou un capteur de champ magnétique.

4. Unité d'affichage (1) selon l'une quelconque des revendications précédentes, comprenant en outre un stabilisateur pour permettre une position mécanique stable de l'afficheur souple (2) après sa déformation sur l'au moins un état supplémentaire.

5. Unité d'affichage (1) selon l'une quelconque des revendications précédentes, dans laquelle le détecteur de déformation comprend en outre une fonctionnalité d'interface utilisateur, p. ex. l'unité d'affichage (1) est agencée de telle sorte qu'à la détection d'un mouvement dans un sens de l'état de stockage ou l'état illustratif , une fonctionnalité d'interface utilisateur soit activée.

6. Unité d'affichage (1) selon l'une quelconque des revendications précédentes, comprenant en outre une interface utilisateur, telle qu'un clavier, un bouton à quatre voies et/ou un écran tactile, qui est mis en oeuvre séparément ou intégré à l'afficheur souple (2).

7. Unité d'affichage (1) selon la revendication 6, dans laquelle dans l'au moins un état supplémentaire l'interface utilisateur est couverte et dans l'état illustratif, l'interface utilisateur n'est pas couverte par l'afficheur souple (2).

8. Unité d'affichage (1) selon la revendication 6 ou 7, comprenant en outre une interface utilisateur supplémentaire qui est dédiée à l'utilisation dans l'au moins un état supplémentaire de l'afficheur souple (2).

9. Procédé d'illustration d'informations sur un côté illustratif (4) d'un afficheur souple (2) d'une unité d'affichage (1), l'unité d'affichage (1) comprenant un noyau (5) par rapport auquel l'afficheur souple (1) est enveloppable, l'afficheur souple (2) étant déformable entre un état de stockage dans lequel l'afficheur souple (2) se trouve dans une position déformée, et un état illustratif dans lequel le côté illustratif (4) de l'afficheur souple (2) est sensiblement plat, visible depuis un point de vue extérieur et il est possible de commander le contenu d'informations visuelles sur le côté illustratif (4), le procédé étant **caractérisé par** les étapes consistant à :
illustrer des informations sur uniquement une partie du côté illustratif (4) de l'afficheur souple (2) quand l'afficheur souple (2) a été déformé su un état supplémentaire entre l'état de stockage et l'état illustratif ;
détecter la déformation de l'afficheur souple (2) sur l'au moins un état supplémentaire au moyen d'un détecteur de déformation, et générer un signal de détection ;
commander le contenu d'informations visuelles en réponse au signal de détection de telle sorte que, dans l'au moins un état supplémentaire de l'afficheur souple (2), les informations soient illustrées uniquement sur la partie visible du côté illustratif (4) ; et
doter le noyau (5) d'une source de lumière (16) adaptée pour éclairer le côté illustratif (4) de l'afficheur souple (2) dans l'état supplémentaire ; et
régler un sens d'un faisceau de lumière (17) généré par la source de lumière (16) en fonction d'un angle d'inclinaison détecté du côté illustratif (4) par rapport à un axe longitudinal du noyau (5), ledit angle d'inclinaison étant détecté au moyen dudit détecteur de déformation.

10. Produit de programme informatique comprenant un code lisible par ordinateur amenant un ordinateur à exécuter un procédé selon la revendication 9.
